# FASCICULE DE BREVET EUROPEEN

(11) **EP 0 847 173 B1**
(45) Date de publication et mention de la délivrance du brevet: **08.12.2004**
(21) Numéro de dépôt: 97203716.2
(22) Date de dépôt: 27.11.1997
(51) Int. Cl.: H04M 1/72

(54) **Dispositif de télécommunication comportant une base et au moins un appareil mobile muni d'un mode d'interphonie particulier**
Telekommunikationseinrichtung bestehend aus einer Basiseinheit und mindestens einer mobilen Einheit mit Gegensprechfunktion
Telecommunication device with a base and at least a mobile part having a special intercom function

(30) Priorité: 06.12.1996 FR 9615047
(43) Date de publication de la demande: 10.06.1998
(73) Titulaire: Koninklijke Philips Electronics N.V., 5621 BA Eindhoven (NL)
(72) Inventeur: Touzeau, Patrick, 75008 Paris (FR)
(74) Mandataire: Charpail, François

(56) Documents cités:
- DE-U- 9 403 795
- FR-A- 2 564 671
- US-A- 4 882 746
- LENCHIK V ET AL: "METHOD FOR REMOTE SIGNALING SUBSCRIBER UNIT INTO VOX MODE" MOTOROLA TECHNICAL DEVELOPMENTS, vol. 22, 1 juin 1994, page 74 XP000456725

## Description

L'invention concerne un dispositif de télécommunication comportant une première partie dite base et au moins une deuxième partie dite mobile, parties entre lesquelles il est possible d'établir par voie hertzienne un mode d'interphonie, outre l'utilisation principale du dispositif en mode de téléphonie.

De tels appareils, connus sous le nom de postes téléphoniques sans fils, sont d'un usage courant et procurent un grand confort d'utilisation aux usagers par le nombre de fonctions et de modes de fonctionnement qu'ils offrent à leurs utilisateurs.

En mode de téléphonie, des appels entrants ou sortants sont possibles, dans un rayon de 200 ou 300 m autour de la base, depuis un mobile qui est un combiné muni d'une antenne émettrice-réceptrice, d'un clavier de numérotation comportant aussi plusieurs touches pour des fonctions spécifiques et, le plus souvent, d'un écran permettant d'afficher des signes alphanumériques et des icones. Au moyen des touches spécifiques et de l'écran, il est facile et très ergonomique de choisir et de sélectionner tel ou tel mode de fonctionnement souhaité comme, par exemple la mélodie de la sonnerie, y compris l'absence de sonnerie, si désiré. Ceci peut se faire simplement par le jeu d'incrémentations ou décrémentations dans un menu déroulant principal, puis validation de telle ou telle option qui peut être suivie de sous-menus dans lesquels on circule par incrémentations-décrémentations et validations successives en regardant défiler les différentes options sur l'écran. La base est généralement plus simple, ne comportant pas de clavier et permet seulement de recevoir des appels en mode dit mains-libres.

Outre la fonction de téléphonie, la fonction d'interphonie, qui ne met pas à contribution le réseau téléphonique, permet à deux personnes de converser à distance, l'une étant près de la base et l'autre étant munie du mobile.

L'invention se propose d'adapter un dispositif du type base plus mobile sans fil pour réaliser un mode d'interphonie particulier pour lequel il est possible de trouver dans le commerce un équipement spécifique : il s'agit d'un type de walkie-talkie constitué par un couple émetteur/récepteur, qui fonctionne comme un walkie-talkie ordinaire, à deux détails près :
- côté émetteur, il reste branché et
- côté récepteur, il n'y a pas de retour sonore vers l'émetteur.
Cet équipement constitue un système de surveillance à distance, particulièrement utile notamment pour la surveillance d'un bébé qui dort, alors que la porte de sa chambre est fermée pour qu'il ne soit pas dérangé par les bruits de l'appartement. Le poste émetteur est placé dans la chambre à surveiller, il capte les bruits environnants (les cris du bébé éventuellement) et les transmet par ondes radio, à quelques mètres de là, à un poste récepteur placé auprès de la (ou porté par la) personne qui surveille tout en vaquant à d'autres occupations. Certains de ces équipements que l'on désigne sous le vocable de Garde-bébé dans la suite du texte sont agréés par l'administration (PTT) tel l' Ecoute-bébé de la société américaine Fisher Price, alors que d'autres ne le sont pas. Ces Garde-bébés fonctionnent dans une gamme de fréquences qui est aussi celle de certains téléphones sans fil, mais sur un seul canal radio pour chaque mobile. Ceci présente l'inconvénient que ce canal unique puisse être brouillé par des interférences radio, sans qu'il soit possible d'y remédier par recherche et utilisation d'un autre canal non brouillé. D'autre part, un Garde-bébé a une portée réduite, de l'ordre de 100 m seulement. En outre, ces équipements n'ont pas d'autre utilisation possible autre que celle pour laquelle ils ont été conçus, même pas l'utilisation en mode d'interphonie classique.

Le but de l'invention est de réaliser un téléphone sans fil qui fonctionne et puisse être utilisé dans un mode d'interphonie réduite dite Garde-bébé. Ce but est atteint et les inconvénients de l'art antérieur sont atténués grâce au fait que le dispositif mentionné en préambule est remarquable en ce qu'il comporte, dans une première mémoire de la base et dans une deuxième mémoire du mobile des moyens de gestion pour engendrer en remplacement dudit mode d'interphonie, un mode d'interphonie réduite qui, lorsqu'il a été sélectionné, peut être activé depuis la base ou le mobile, pour provoquer l'état suivant du dispositif :
- dans la partie distante de celle où s'est produite l'activation, inhibition de la sonnerie, mise en émission automatique en mode d'interphonie, mise en service du microphone et mise hors service de l'écouteur, respectivement du haut-parleur.
- dans la partie où s'est produite l'activation, mise en service du haut-parleur, respectivement de l'écouteur, et mise hors service du microphone.

De préférence, le mobile étant seul à comporter un clavier, c'est depuis ce mobile que s'effectue la programmation en mode Garde-bébé, au moyen du menu déroulant, comme décrit ci-dessus, de façon tout à fait comparable à celle du choix d'une mélodie pour la sonnerie par exemple. A cet effet, il est prévu en sous- mode de la rubrique dite "configuration téléphone", et par exemple après la sous-rubrique dite "sélection des mélodies", une sous-rubrique dite "sélection du mode d'interphonie". Cette dernière sous-rubrique contient deux modes qui sont : Interphonie qui est le mode d'interphonie habituel, et Garde-bébé qui est le mode d'interphonie réduite. Lorsque le mode Garde-bébé est sélectionné par appui sur une touche de validation, cette information est transmise par voie hertzienne à la base qui décode ce signal particulier et se configure à son tour en conséquence, en mode Garde-bébé. On notera que la séquence que l'on vient juste de décrire pour la configuration de l'ensemble du dispositif en un mode donné est déjà connue et utilisée pour le choix du mode de numérotation par exemple, selon que l'on désire la numérotation décimale ou la numérotation par fréquences vocales.

La description qui suit en regard des dessins annexés le tout donné à titre d'exemple non limitatif fera bien comprendre comment l'invention peut être réalisée.
La figure 1 représente un dispositif conforme à l'invention.
La figure 2 est un diagramme permettant d'expliciter le fonctionnement du dispositif selon l'invention.

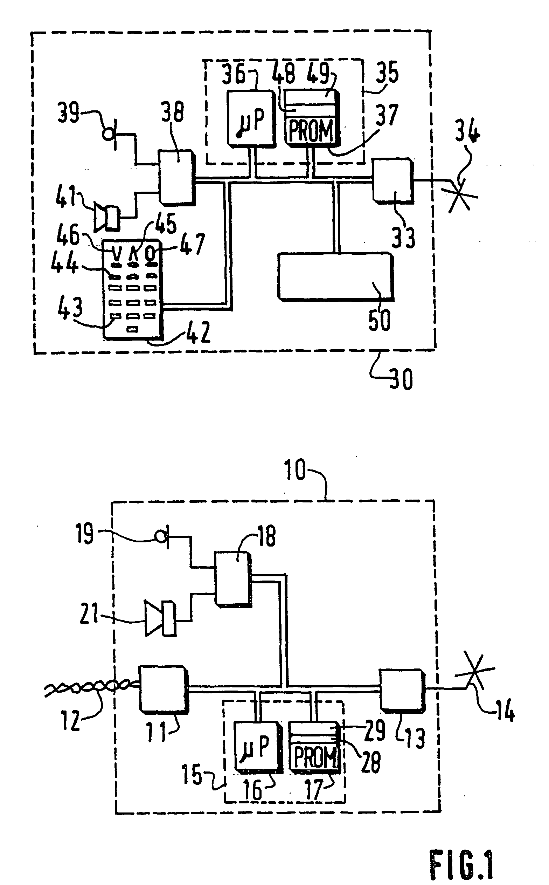

Le dispositif montré à la figure 1 est un téléphone sans fil par exemple du genre connu sous le nom CTO. Il est formé d'une base 10 et d'au moins un appareil mobile (ou mobile) 30 qui constituent une première et une deuxième partie respectivement.

La base 10 est formée d'un circuit de connexion 11 pour permettre une connexion avec une ligne téléphonique 12. Elle est formée aussi par un circuit d'émission-réception 13, couplé à une antenne 14, pour communiquer avec les différents mobiles qui lui sont rattachés par voie radioélectrique, le mobile 30 notamment. La base 10 comporte, aussi, un ensemble de gestion à microprocesseur 15 qui déroule des instructions pour mettre en oeuvre, notamment, les moyens préconisés par l'invention. Cet ensemble 15 comporte notamment le microprocesseur 16 proprement dit et une mémoire morte 17. En outre, un circuit vocal 18 auquel est raccordé un microphone 19 et un haut-parleur 21 permet à un utilisateur de converser en mode dit mains-libres sur appel entrant soit en provenance du réseau par la ligne 12, soit en provenance d'un mobile par l'antenne 14. Il est aussi possible d'appeler le mobile depuis la base, ce qui constitue la fonction interphone, ou mode d'interphonie.

Le mobile 30 a une structure qui, pour partie, est comparable à celle de la base 10 : il s'agit des éléments 33, circuit d'émission-réception ; 34, antenne réceptrice-émettrice ; 35, ensemble de gestion à microprocesseur muni d'un microprocesseur 36 proprement dit et d'une mémoire morte 37 ; 38, circuit vocal auquel sont raccordés un microphone 39 et un écouteur 41 homologue du haut-parleur 21 de la base. L'ensemble de gestion à microprocesseur 35 déroule alors des instructions pour mettre en oeuvre, notamment, les moyens préconisés par l'invention et assure le fonctionnement du mobile 30.

Le combiné-mobile 30 comporte aussi un clavier 42 muni d'une pluralité de touches : des touches telles que 43, essentiellement destinées à la composition d'un numéro téléphonique (touches blanches sur la figure 1), et des touches telles que 44 qui permettent d'accéder à tel ou tel fonctionnement principal de l'appareil (touches noires). Parmi les touches 44, on distingue entre autres la touche dite : prise de ligne et la touche interphone/transfert. L'une des touches 44 est une touche menu qui permet d'accéder à tel ou tel mode de fonctionnement (ou option) présélectionné. La circulation à travers le menu se fait par incrémentation-décrémentation au moyen de touches 45 et 46, suivie d'une validation par une touche de validation 47, suivie encore d'une incrémentation-décrémentation dans un sous-menu, jusqu'à atteindre l'option choisie, que l'on sélectionne en appuyant sur la touche 47. Après quoi l'on peut revenir à l'état de veille du mobile en ré-appuyant sur la touche "menu" 44.

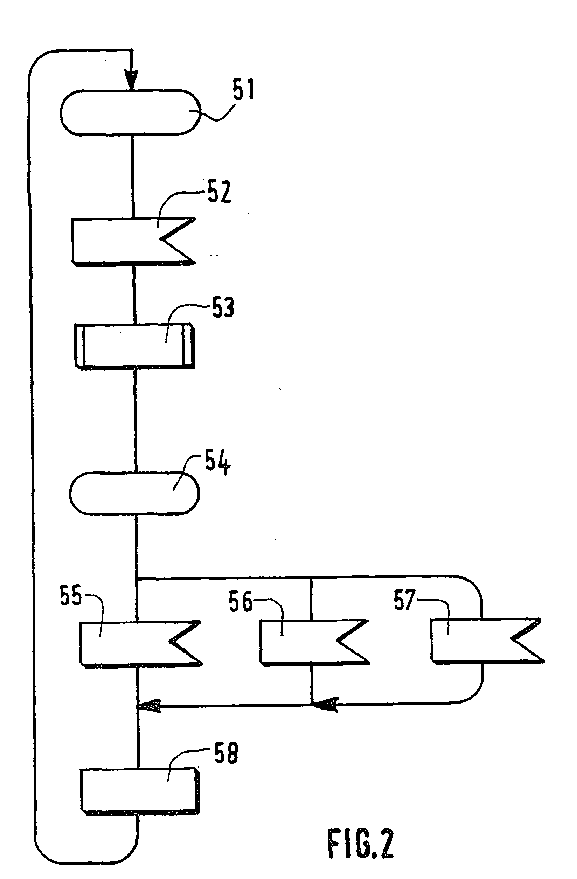

Dans l'art connu, le mode d'interphonie est une fonction principale qui, à ce titre, ne nécessite pas de figurer dans le menu. Selon l'invention, on crée un mode supplémentaire, dit Garde-bébé, qui est un mode d'interphonie réduite. Il est alors créé un sous-menu pour l'interphonie qui contient deux options, à savoir : le mode Interphonie, et le mode Garde-bébé qui est expliqué ci-dessous en référence à la figure 2. Les programmes relatifs aux deux modes d'interphonie sont contenus dans la mémoire morte 17 aux emplacements 28 et 29 et dans la mémoire morte 37 aux emplacements 48 et 49, au même titre que d'autres sous-menus, tels le choix d'une mélodie pour la sonnerie par exemple, ou le choix d'un mode de numérotation.

On notera, comme il a déjà été indiqué plus haut, que lorsque l'option Garde bébé est validée, par appui sur la touche 47, cette information est transmise par voie hertzienne à la base qui décode ce signal particulier et se configure à son tour, en conséquence, en mode Garde-bébé, ce qui est une séquence déjà connue pour l'établissement d'autres modes de fonctionnement du dispositif.

La figure 2 illustre par un diagramme les fonctionnalités qui doivent être réalisées sous forme d'un programme par l'homme du métier, puis implantées dans les ensembles à microprocesseur 15 et 35 (figure 1), pour mettre en oeuvre l'invention, le but recherché étant de pouvoir surveiller les bruits dans la chambre d'un enfant, sans le déranger.

Pour fixer les idées on suppose que le combiné-mobile, à l'état de repos, se trouve dans la chambre de l'enfant et qu'on déclenche le mode Garde-bébé depuis la base située dans une autre pièce, alors que les deux parties du dispositif ont été préalablement configurées en mode Garde-bébé.

Au bloc 51, la base est à l'état de repos. En 52, on déclenche le mode Garde-bébé en appuyant sur la touche "interphone" de la base (touche INTERCOM en anglais). En 53, le mobile qui reçoit l'appel :
- inhibe sa sonnerie,
- décroche automatiquement,
- met hors service son écouteur,
- met en service son microphone.

Suite à l'appel en retour du mobile, la base devient active en :
- mettant en service son haut-parleur,
- mettant hors service son écouteur.
On a ainsi provoqué à distance depuis la base une liaison unidirectionnelle du mobile vers la base.

En 54, on se trouve en mode Garde-bébé, l'environnement sonore de la chambre à surveiller étant retransmis par le haut-parleur de la base (dont le volume son est réglable). Dans cette situation, on peut prévoir, en option, que si un appel venant de l'extérieur se produit alors que la fonction Garde-bébé est active, le mobile positionné en Garde-bébé ne sonne pas (seule la base sonne) et que la fonction Garde-bébé soit interrompue. Il est alors possible de prendre l'appel sur la base ou sur le mobile.

Les blocs 55, 56 et 57 sont en parallèle et marquent trois façons différentes d'interrompre le mode de fonctionnement Garde-bébé.

En 55, une durée maximale imposée en mode d'interphonie par la réglementation des télécommunications a été atteinte. Cette durée, très variable selon les pays est par exemple de 15 minutes en France et deux heures aux Etats-Unis. Le dispositif se remet à l'état de repos automatiquement. En option, on peut prévoir qu'un signal sonore spécifique soit émis par la base, en l'occurrence, pour signaler l'arrêt et l'on peut déclencher à nouveau la veille, immédiatement après.

En 56, l'interruption de la veille est déclenchée en appuyant sur la touche interphone du mobile, ou en 57 en appuyant sur la touche interphone de la base. Au bloc 58, le microphone et le haut-parleur de la base sont coupés, ainsi que le microphone et l'écouteur du mobile. Base et mobile reviennent à l'état de repos (retour au bloc 51).

On notera que pendant tout le temps de fonctionnement en mode Garde-bébé, un voyant lumineux clignote sur la base, ce voyant étant allumé en permanence, lorsque la base est au repos tout en étant alimentée, le clignotement de ce voyant clignotant indiquant d'ailleurs, plus généralement, tout type de fonctionnement possible de la base.

Si l'on intervertit les rôles de la base et du mobile, la base étant dans la chambre à surveiller, le mobile dans une autre pièce et le déclenchement de la veille effectué à partir du mobile, le mode d'activation des deux parties du dispositif s'effectue comme décrit ci-dessus mais dans l'ordre : mobile-base-mobile et les fonctionnalités indiquées plus haut sont interverties entre base et mobile, le combiné du mobile remplaçant le haut-parleur de la base ; l'arrêt de la surveillance est régi par l'une des trois possibilités déjà indiquées ci-dessus en référence à la figure 2.

Lorsque le dispositif est configuré de façon telle que sa sonnerie puisse être mise hors service, celle du mobile particulièrement, il est avantageux que cet état soit signalé visuellement, au moins sur le mobile : soit au moyen d'un voyant lumineux prévu à cet effet (non représenté), soit, de façon préférée, sur un écran, par exemple un écran à cristaux liquides comme représenté en 50 à la figure 1. Pendant tout le temps où le dispositif est configuré en mode d'interphonie réduite, on peut prévoir que soit affichée sur l'écran 50 par exemple l'expression : GARDE-BEBE, cette mesure supplémentaire devant alors être prévue et rajoutée dans le programme Garde-bébé lors de son implantation initiale dans l'ensemble à microprocesseur 35 du mobile.

Pour en revenir à la programmation en mode interphonie ou en mode Garde-bébé, l'affichage sur l'écran 50 (figure 1) des différentes rubriques et options du menu obtenues successivement par incrémentations et validations successives est très ergonomique. On notera par ailleurs que la séquence à réaliser pour passer d'un mode d'interphonie à l'autre est la même selon que ce passage a lieu dans l'un ou l'autre sens.

L'invention ne se limite pas aux modes de réalisation décrits ci-dessus et de nombreuses variantes sont possibles.

Dans certaines versions, la base comporte un clavier comparable à celui du mobile et il devient alors possible de configurer le dispositif, notamment dans le mode Garde-bébé depuis la base.

Le mobile peut aussi être muni d'un haut-parleur, commutable sur l'écouteur, et réciproquement, depuis une touche dite : haut-parleur, dans toutes les conditions de fonctionnement pour lesquelles l'écouteur est en service, et notamment en mode Garde-bébé, lorsque le mobile n'est pas dans la pièce à surveiller.

Il est courant qu'un téléphone sans fil comporte plusieurs mobiles ; dans ce cas, seul l'un des mobiles peut, d'un point de vue physique, fonctionner en mode Garde-bébé ; il n'est donc pas nécessaire que le (ou les) mobile(s) autre(s) que celui (ceux) décrit(s) ci-dessus comporte(nt) dans son (leur) menu le mode Garde-bébé (ou Baby-sit en anglais).

## Revendications

1. Dispositif de télécommunication comportant une première partie dite base et au moins une deuxième partie dite mobile, parties entre lesquelles il est possible d'établir par voie hertzienne un mode d'interphonie, outre l'utilisation principale du dispositif en mode de téléphonie, **caractérisé en ce qu'**il comporte dans une première mémoire de la base et dans une deuxième mémoire du mobile des moyens de gestion pour engendrer en remplacement dudit mode d'interphonie, un mode d'interphonie réduite qui, lorsqu'il a été sélectionné, peut être activé depuis la base ou le mobile, pour provoquer l'état suivant du dispositif :
- dans la partie distante de celle où s'est produite l'activation, inhibition de la sonnerie, mise en émission automatique en mode d'interphonie, mise en service du microphone et mise hors service de l'écouteur, respectivement du haut-parleur,
- dans la partie où s'est produite l'activation, mise en service du haut-parleur, respectivement de l'écouteur, et mise hors service du microphone.

2. Dispositif de télécommunication selon la revendication 1 dans lequel lesdits moyens de gestion sont constitués par un premier ensemble à microprocesseur dans ladite base et un deuxième ensemble à microprocesseur dans ledit mobile.

3. Dispositif de télécommunication selon la revendication 1 ou 2, **caractérisé en ce que** lesdits moyens de gestion engendrent un signal sonore spécifique à partir de la base lorsque la durée maximale possible pour le mode d'interphonie réduite s'est écoulée.

4. Dispositif de télécommunication selon l'une des revendications 1 à 3, **caractérisé en ce que** ledit mobile comporte un émetteur de signal lumineux spécifique conçu pour être activé par lesdits moyens de gestion pendant tout le temps où le dispositif est configuré en mode d'interphonie réduite.

5. Procédé d'initialisation en un mode d'interphonie d'un dispositif de téléphonie sans fil comportant une base et au moins un mobile, **caractérisé en ce qu'**il comporte les étapes suivantes :
- déclenchement depuis la base du mode d'interphonie réduite par appui sur la touche Interphonie,
- réception par voie hertzienne dans le mobile de la commande de configuration en mode d'interphonie réduite consistant en l'inhibition de sa sonnerie, la mise en service de son microphone, la mise hors service de son écouteur et l'appel automatique de la base pour provoquer, dans cette dernière,
- la mise en service du haut-parleur et la mise hors service du microphone.

## Patentansprüche

1. Telekommunikationseinrichtung mit einem ersten sogenannten Basiseinheit und mindestens einer zweiten sogenannten mobilen Einheit, wobei es neben der hauptsächlich verwendeten Telefonfunktion der Einrichtung möglich ist, über Funk eine Gegensprechfunktion aufzubauen, **dadurch gekennzeichnet, dass** sie in einem ersten Speicher der Basiseinheit und in einem zweiten Speicher der mobilen Einheit Steuerungsmittel aufweist, um als Ersatz der besagten Gegensprechfunktion eine eingeschränkte Gegensprechfunktion zu aktivieren, wenn diese an der Basiseinheit oder an der mobilen Einheit ausgewählt wurde, damit die Einrichtung in folgenden Zustand übergeht:
- In dem zu demjenigen entfernten Teil, in dem die Aktivierung stattfand, zum Unterdrücken des Klingeltons, Schalten der Gegensprechfunktion auf automatisches Senden, Einschalten des Mikrofons und Ausschalten des Hörers bzw. des Lautsprechers,
- in dem Teil, in dem die Aktivierung stattfand, zum Einschalten des Lautsprechers bzw. des Hörers und Ausschalten des Mikrofons.

2. Telekommunikationseinrichtung nach Anspruch 1, in der die besagten Steuerungsmittel aus einer ersten Mikroprozessoreinheit in der besagten Basiseinheit und einer zweiten Mikroprozessoreinheit in der besagten mobilen Einheit gebildet werden.

3. Telekommunikationseinrichtung nach Anspruch 1 oder 2, **dadurch gekennzeichnet, dass** die besagten Steuerungsmittel ein spezifisches Tonsignal an der Basiseinheit auslösen, wenn die höchstmögliche Dauer für die eingeschränkte Gegensprechfunktion erreicht wurde.

4. Telekommunikationseinrichtung nach einem der Ansprüche 1 bis 3, **dadurch gekennzeichnet, dass** die besagte mobile Einheit einen optischen Signalsender enthält, der spezifisch dafür entwickelt wurde, um von den besagten Steuerungsmittel während der gesamten Zeit aktiviert zu werden, in der die Einrichtung in eingeschränkter Gegensprechfunktion konfiguriert ist.

5. Initialisierungsverfahren in Gegensprechfunktion einer schnurlosen Telefoneinrichtung mit einer Basiseinheit und mindestens einer mobilen Einheit, **dadurch gekennzeichnet, dass** es folgende Schritte umfasst:
- Auslösen an der Basiseinheit der eingeschränkten Gegensprechfunktion durch Drücken der Gegensprechtaste,
- Empfangen per Funk in der mobilen Einheit der Konfigurationssteuerung für eingeschränkte Gegensprechfunktion bestehend aus der Unterdrückung des Klingeltons, dem Einschalten ihres Mikrofons, dem Ausschalten ihres Hörers und dem automatischen Anrufen der Basiseinheit, um in dieser auszulösen das
- Einschalten des Lautsprechers und Ausschalten des Mikrofons.

## Claims

1. A telecommunication device comprising a first part called base and at least a second part called mobile, between which parts it is possible to establish an intercom mode by radio, in addition to the main use of the device in the telephone mode, **characterized in that** it comprises in a first memory of the base and in a second memory of the mobile management means for generating a replacement of said intercom mode, a reduced-intercom mode which, when selected, can be activated from the base or the mobile, to induce the next state of the device:
- in the part remote from the part where the activation takes place, switching off of the ringing, automatic transmission in the intercom mode, switching on of the microphone and switching off of the earphone, or the loudspeaker, respectively,
- in the part where the activation takes place, switching on of the loudspeaker or earphone respectively, and switching off of the microphone.

2. A telecommunication device as claimed in claim 1, in which said management means are formed by a first microprocessor assembly in said base and a second microprocessor assembly in said mobile.

3. A telecommunication device as claimed in claim 1 or 2, **characterized in that** said management means generate a specific sound signal from the base when the maximum possible duration for the reduced-intercom mode has elapsed.

4. A telecommunication device as claimed in one of the claims 1 to 3, **characterized in that** said mobile comprises a specific light signal transmitter arranged for being activated by said management means during all the time when the device is arranged in the reduced-intercom mode.

5. An initialization method for initializing in the intercom mode a wireless telephony device comprising a base and at least a mobile, **characterized in that** the method comprises the following steps:
- switching to the reduced-intercom mode from the base by depressing the Intercom key,
- receiving by radio in the mobile the command to configure the reduced-intercom mode which comprises inhibiting its ringing, switching on its microphone, switching off its loudspeaker and the automatic call of the base to cause in the latter,
- the loudspeaker to be switched on and the microphone to be switched off.
